# EUROPÄISCHE PATENTSCHRIFT

(11) **EP 2 796 394 B1**
(45) Veröffentlichungstag und Bekanntmachung des Hinweises auf die Patenterteilung: **25.05.2016**
(21) Anmeldenummer: 14151855.5
(22) Anmeldetag: 21.01.2014
(51) Int. Cl.: B65G 47/86

(54) **Verstellbarer Klammerstern**
Adjustable clamping starwheel
Carrousel réglable avec pinces

(30) Priorität: 22.04.2013 DE 102013207267
(43) Veröffentlichungstag der Anmeldung: 29.10.2014
(73) Patentinhaber: Krones AG, 93073 Neutraubling (DE)
(72) Erfinder: Ederer, Roland, 93073 Neutraubling (DE); Fischer, Harald, 93073 Neutraubling (DE); Prechtner, Andreas, 93073 Neutraubling (DE)
(74) Vertreter: Grünecker Patent- und Rechtsanwälte PartG mbB

(56) Entgegenhaltungen:
- EP-A1- 0 647 578
- EP-A1- 2 186 759
- EP-A1- 2 343 255
- DE-A1- 19 903 319
- DE-U1- 29 723 880
- US-A- 5 778 633

## Beschreibung

Die Erfindung betrifft Klammersterne für Behälterbehandlungsmaschinen, wie beispielsweise Etikettiermaschinen, die über verstellbare Klammerkränze verfügen.

### Stand der Technik

Aus dem Stand der Technik sind Klammersterne bereits bekannt. So offenbart beispielsweise die EP 2186759 eine Vielzahl von möglichen Ausführungsformen für Klammersterne. Auch die WO 98/22374 offenbart Klammersterne, die Behälter in einem bestimmten Bereich greifen können.

Aus der DE 297 23 880 U1 ist ein Paar von Klammersternen gemäß dem Oberbegriff des Anspruchs 1 und ein Verfahren gemäß dem Oberbegriff des Anspruchs 7 bekannt.

### Aufgabe

Ausgehend vom Stand der Technik liegt der Erfindung die Aufgabe zugrunde, eine Vorrichtung und ein Verfahren zum sicheren und gleichzeitig flexiblen Transport von Behältern anzeigeben.

### Lösung

Diese Aufgabe wird erfindungsgemäß durch das Paar von Klammersternen gemäß Anspruch 1 und das Verfahren zum Befördern von Behältern nach Anspruch 7 gelöst. Erfindungsgemäß wird sichergestellt, dass beide Klammersterne zeitgleich auf den geänderten Abstand eingestellt werden und Fehler durch das Umstellen beispielsweise nur eines Klammersterns können vermieden werden.

Der Klammerstern umfasst einen unteren Klammerkranz und einen oberen Klammerkranz mit jeweils einer Vielzahl von Klammern, wobei der untere und obere Klammerkranz geeignet sind, Behälter an einem oberen Bereich und einem unteren Bereich zu greifen, wobei der obere Klammerkranz so gelagert ist, dass sein Abstand zum unteren Klammerkranz verändert werden kann. So wird es möglich, dass eine Anpassung der Positionen der beiden Klammerkränze des Klammersterns beispielsweise in Abhängigkeit von der Länge eines Behälters eingestellt wird und ein Greifen des Behälters stets an der selben Position (beispielsweise am Verschluss) durchgeführt werden kann.

In einer Ausführungsform ist der Klammerstern dadurch gekennzeichnet, dass der untere Klammerkranz und der obere Klammerkranz über eine längenverstellbare Achse oder Welle miteinander verbunden sind. Durch eine entsprechende Achse/Welle wird zum einen der Betrieb der Klammersterne ermöglicht und zum anderen die Stabilität des Klammersterns sichergestellt.

Weiterhin können Mittel zur Steuerung des unteren Klammerkranzes auf der vom oberen Klammerkranz abgewandten Seite des unteren Klammerkranzes angeordnet sein und/oder Mittel zur Steuerung des oberen Klammerkranzes auf der vom unteren Klammerkranz abgewandten Seite des oberen Klammerkranzes angeordnet sein. Diese Aufteilung der Mittel zur Steuerung der Klammerkränze lässt den Bereich, in dem Behälter gegriffen werden, möglichst frei, wodurch störende Einflüsse minimiert werden.

Eine Ausführungsform ist dadurch gekennzeichnet, dass jeder Klammer des oberen Klammerkranzes ein Federelement zugeordnet ist, das die Klammer in eine geöffnete Position vorspannt und dieser Klammer ein Hebel zugeordnet ist, der die Klammer in einer geschlossenen Position fixieren kann. So wird auf konstruktiv möglichst einfache Weise eine Bewegung der Klammern und Positionierung in den entsprechenden Endpositionen ermöglicht.

Gemäß einer weiteren Ausführungsform kann der Abstand des oberen Klammerkranzes zum unteren Klammerkranz so eingestellt werden, dass der obere Bereich sich wenigstens über einen Verschluss eines Behälters erstreckt und/oder sich der untere Bereich über 1/4 der Länge des Behälters, vorzugsweise über 1/5 der Länge des Behälters von der unteren Begrenzung des Behälters aus erstreckt. So wird ein Greifen der Behälter an Bereichen möglich, in denen keine weitere Behandlung, beispielsweise durch das Aufbringen von Etiketten, nötig ist, wodurch möglichst viel Platz an der Oberfläche des Behälters für das störungsfreie Aufbringen von Etiketten zur Verfügung steht und weiterhin Etiketten, die bereits auf einem Behälter aufgebracht sind, so nicht durch die Klammern beeinträchtigt werden.

Es kann vorgesehen sein, dass Klammern des unteren/oberen Klammerkranzes des einen Klammersterns einen Behälter im unteren/oberen Bereich mit einem Versatz zu den Klammern des unteren/oberen Klammerkranzes des anderen Klammersterns greifen können. So wird ein Übereinandergreifen der Klammern verhindert, was zu Störungen führen könnte.

Es wird ein Verfahren zum Befördern von Behältern mittels eines Klammersterns bereitgestellt, der einen unteren Klammerkranz und einen oberen Klammerkranz umfasst, wobei der untere Klammerkranz einen Behälter in einem unteren Bereich greift und der obere Klammerkranz den Behälter in einem oberen Bereich greift, wobei der Abstand des oberen Klammerkranzes zum unteren Klammerkranz verändert wird. Mit diesem Verfahren wird ein flexibles Verfahren zum Befördern von Behältern bereitgestellt. Erfindungsgemäß ist beabsichtigt, dass ein zweiter Klammerstern vorgesehen ist und ein Behälter, der dem ersten Klammerstern zugeführt wird, von diesem an den zweiten Klammerstern übergeben wird. Mit dieser Ausführungsform wird ein flexibles Verfahren zum Übergeben von Behältern von einem Klammerstern zu einem anderen bereitgestellt.

Gemäß einer Ausführungsform des Verfahrens wird jede Klammer des oberen Klammerkranzes in einer geöffneten Position durch ein Federelement vorgespannt wird und durch einen Hebel, der sich über einen Totpunkt hinwegbewegt, in eine geschlossene Position überführt und gesperrt. Somit kann beispielsweise eine wohl definierte Krafteinwirkung auf diesen oberen Bereich des Behälters sichergestellt werden.

Weiterhin kann der Abstand des oberen Klammerkranzes zum unteren Klammerkranz so eingestellt werden, dass der obere Bereich einen Verschluss eines Behälters umfasst und der untere Bereich sich von der unteren Begrenzung des Behälter über 1/4 der Länge des Behälters, vorzugsweise über 1/5 der Länge des Behälters erstreckt. So wird eine stabile Beförderung des Behälters gewährleistet und gleichzeitig eine Beschädigung von beispielsweise bereits aufgebrachten Etiketten in den übrigen Bereichen vermieden.

In einer Ausführungsform ist vorgesehen, dass die Klammern des oberen Klammerkranzes einen Behälter im oberen Bereich umgreifen, wobei das Umgreifen mit Spiel erfolgt. Hiermit wird ein Fixieren eines Behälters ermöglicht, ohne dass überflüssiger Druck beispielsweise auf einen Verschluss ausgeübt wird, der zu Beschädigungen von Qualitätssiegeln oder Ähnlichem führen könnte.

In einer Ausführungsform greifen die Klammern des oberen Klammerkranzes einen Behälter im oberen Bereich oberhalb eines an dem Behälter befestigten Schrumpfetiketts. Eine Beschädigung oder ungewollte Verschiebung des Schrumpfetiketts wird hier vermieden.

In einer Ausführungsform ist das Verfahren dadurch gekennzeichnet, dass Klammern des unteren/oberen Klammerkranzes des einen Klammersterns einen Behälter im unteren/oberen Bereich mit einem Versatz zu den Klammern des unteren/oberen Klammerkranzes des anderen Klammersterns greifen. Somit wird eine sichere Übergabe eines Behälters von einem Klammersteren zu einem anderen gewährleistet, ohne dass durch Ineinandergreifen der Klammern Beschädigungen beispielsweise des Behälters oder der Klammern auftreten können.

### Kurze Beschreibung der Figuren

- Fig. 1: Schematische Darstellung eines Klammersterns.
- Fig. 2: Schematische Darstellung einer Anordnung von Klammersternen gemäß einer Ausführungsform.
- Fig. 3: Darstellung der Übergabe eines Behälters gemäß einer Ausführungsform.
- Fig. 4a+b: Darstellung eines Greifens einer Klammer um einen Verschluss gemäß einer Ausführungsform.
- Fig. 5: Schematische Darstellung einer Klammer eines Klammersterns.

### Ausführliche Beschreibung

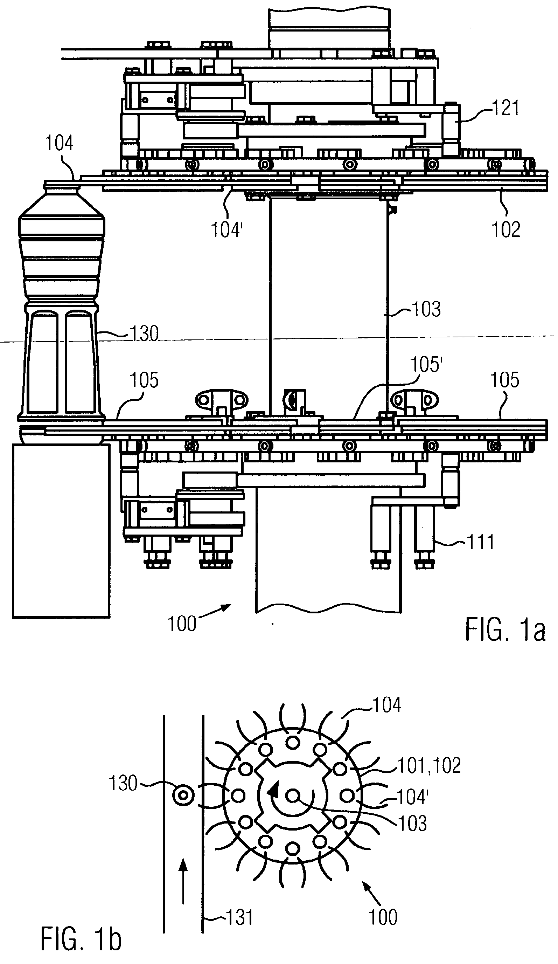

Fig. 1 zeigt einen Klammerstern 100. Dieser umfasst einen unteren Klammerkranz 101, der über eine Vielzahl von Klammern 105 und 105' verfügt sowie einen oberen Klammerkranz 102, der ebenfalls über die gleiche Anzahl von Klammern 104 und 104' verfügt. Vorzugsweise sind diese beiden Klammerkränze über die Verbindung 103 miteinander verbunden. Diese Verbindung ist vorzugsweise eine Achse oder auch eine Welle, um die die Klammersterne 101 und 102 gedreht werden können und ist insbesondere längenverstellbar. Weiterhin ist vorgesehen, dass Mittel zum Betrieb des unteren Klammersterns 101, wie hier dargestellt, auch unterhalb dieses Klammersterns 101 angeordnet sind. Bei diesen Mitteln 111 kann es sich beispielsweise um Servomotoren oder Ähnliches handeln. Analog sind oberhalb des oberen Klammersterns 102 Mittel 121 zum Betrieb dieses Klammersterns vorgesehen. Es kann auch vorgesehen sein, dass ein Betrieb der Klammersterne 101 und 102 über eine einzige Antriebsvorrichtung erfolgt. Dabei kann es sich beispielsweise um einen Servomotor handeln, der die durchgehende Welle 103 antreibt, an der die Klammersterne mitrotierend befestigt sein können. Die Achse/Welle 103 ist längenverstellbar ausgebildet. Sie dient dazu, den Abstand zwischen den Klammerkränzen 101 und 102 einzustellen. Diese Einstellung kann gemäß erhaltener Sensordaten, beispielsweise in Abhängigkeit der Länge eines Behälters 130, der durch den Klammerstern transportiert werden soll, und eine entsprechende Steuereinrichtung, die einen Motor zur Verstellung der Länge der Achse oder Welle steuert, erfolgen.

Fig. 1b zeigt eine Draufsicht des Klammerkranzes und eines Förderers 131, der dem Klammerkranz Behälter 130 zuführt. Wie Fig. 1b verdeutlichen soll, sind die beiden Klammerkränze 101 und 102 parallel zueinander deckungsgleich an der Achse/Welle 103 angeordnet. Die Klammern 104 und 104' bzw. 105 und 105' für den unteren Klammerkranz greifen einen Behälter 130 und können ihn so beispielsweise von dem Förderer 131 wegbefördern oder diese Behälter auch einem anderen Förderer zuführen. Auch eine Übergabe an andere Klammerkränze oder Beförderungseinrichtungen und Behandlungsmaschinen ist denkbar.

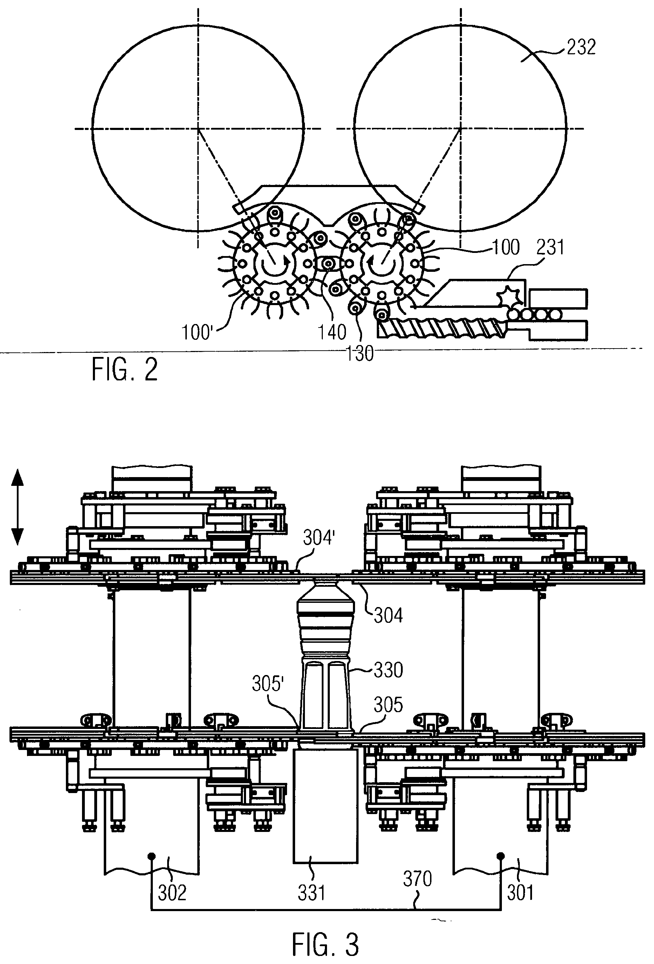

Fig. 2 zeigt eine erfindungsgemäße Anordnung eines Paares von Klammersternen 100 und 100', die Behälter von einem Förderer 231 einer Behälterbehandlungsmaschine 232, wie beispielsweise einer Etikettiermaschine, zuführen. Dabei werden Behälter 130 über den Förderer 231 dem ersten Klammerstern 100 zugeführt. Dieser übernimmt, wie dargestellt, mit jeder Klammer bzw. mit einer Klammer des oberen Klammerkranzes und der entsprechenden Klammer des unteren Klammerkranzes einen Behälter 130. Dieser wird dann in der angegebenen Pfeilrichtung durch den Klammerstern 100 weitertransportiert. An einem Übergabepunkt 140 kann der zweite Klammerstern 100' einen Behälter, der vom ersten Klammerstern 100 befördert wird, übernehmen. Dabei werden vorzugsweise zunächst die Klammern des zweiten Klammersterns 100' um den Behälter geschlossen und anschließend die Klammern des ersten Klammersterns 100 von dem Behälter gelöst, so dass dieser permanent mit einem der Klammersterne verbunden ist.

Es kann hier beispielsweise vorgesehen sein, dass der zweite Klammerstern 100' nur jeden zweiten Behälter des ersten Klammersterns 100 übernimmt und der Behälterbehandlungsmaschine zuführt. Falls die Klammersterne über eine ungerade Anzahl Klammern und damit Positionen für Behälter 130 verfügen, kann vorgesehen sein, dass der "übriggebliebene" Behälter aus dem ersten Förderstern eine weitere Umdrehung auf dem ersten Förderstern durchläuft, um dann erst bei der nächsten Drehung vom zweiten Klammerstern 100' übernommen zu werden. Dazu kann eine Elektronik oder Steuerung vorgesehen sein, die das Mitführen dieses Behälters regelt. Sofern die Klammersterne 100 und 100' über eine gerade Anzahl Klammern verfügt, ist so eine Steuerung nicht notwendig.

Fig. 3a zeigt eine mögliche Ausführungsform der Klammern. Insbesondere wird hier die Übergabe eines Behälters 130 von einem der Klammersterne zu einem anderen verdeutlicht. Der Behälter 330 wird durch den ersten Klammerstern 301 mit der Klammer 305 des unteren Klammerkranzes und der Klammer 304 des oberen Klammerkranzes gehalten. Vorzugsweise greift die untere Klammer 305 dabei in den unteren Bereich des Behälters 330, vorzugsweise in das untere Viertel, besonders bevorzugt in das untere Fünftel des Behälters, so dass weiter oben angebrachte Etiketten nicht beschädigt werden. Die obere Klammer 304 umgreift den Behälter 330 im Bereich des Verschlusses. Bevorzugt ist dabei entweder ein Bereich direkt auf Höhe des Verschlusses des Behälters 330 oder 1 bis 5 mm oberhalb oder unterhalb des Tragrings, da in diesem Bereich zumeist keine Etiketten angebracht sind. Diese Haltepositionen sind so nicht erforderlich. Der untere und obere Klammerkranz können auch an anderen Stellen des Behälters angreifen, sofern dies erforderlich ist. Hierbei ist insbesondere von Vorteil, dass durch die Höhenverstellung bzw. Verstellung des Abstands des oberen Klammerkranzes zum unteren Klammerkranz die Griffpositionen der Klammern des oberen Klammerkranzes geändert werden können.

Wie in Fig. 3 dargestellt, greift die untere Klammer 305' des zweiten Klammerkranzes in der Höhe versetzt zur unteren Klammer 305 des ersten Klammerkranzes aber in einem entsprechenden Bereich des Behälters. Selbiges gilt für die obere Klammer 304' des oberen Klammerkranzes. Haben die Klammern 304' und 305' den Behälter gegriffen, können die Klammern 304 und 305 gelöst werden und die Übergabe des Behälters ist beendet. Um bei veränderter Größe der Behälter oder ansonsten notwendiger Verstellung des Abstandes der unteren und oberen Klammerkränze der jeweiligen Klammersterne zueinander eine synchrone Verstellung der beiden oberen Klammerkränze zu gewährleisten, ist eine mechanische Verbindung 370 (nur schematisch dargestellt) vorzugsweise in Form von einem Kettenantrieb oder Zahnrädern oder einer elektronischen Kopplung vorgesehen. Mit dieser Vorrichtung erfolgt dann eine Verstellung des Abstands der oberen Klammerkränze zu den jeweils unteren Klammerkränzen synchron. Diese Verstellung kann stufenlos erfolgen oder aber auf bestimmte, voreingestellte Werte erfolgen. Bevorzugt ist diese mechanische Verbindung 370 unterhalb einer Tischplatte, auf der die Klammerkränze angeordnet sind, vorgesehen oder zumindest im Bereich unter dem Förderer 331. So wird der Raum oberhalb der Tischplatte bzw. des Förderers und insbesondere die beförderten Behälter vor ungewünschten Verunreinigungen durch beispielsweise Schmiermittel für den Kettenantrieb geschützt.

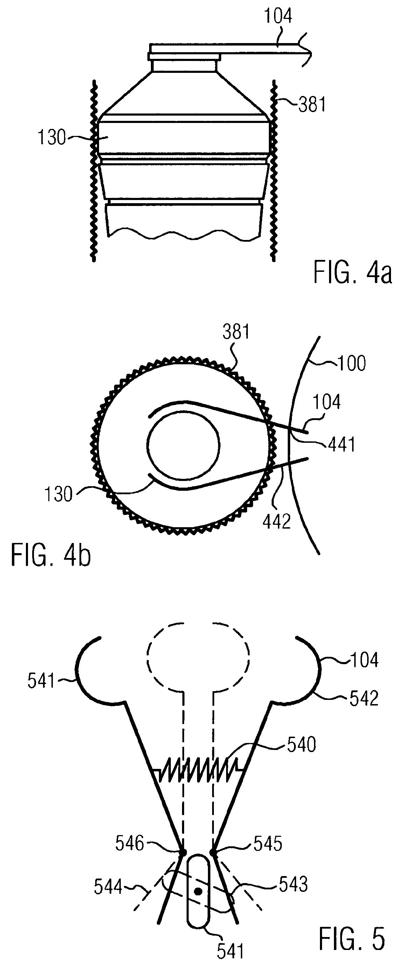

Fig. 4 zeigt eine Ausführungsform des Greifens einer Klammer des oberen Klammerkranzes um einen Behälter 130. In diesem Ausführungsbeispiel gemäß Fig. 4a ist ein Schrumpfetikett 381 über den Behälter 130 gezogen worden. In einem solchen Fall greift die Klammer 104 vorzugsweise um den Verschluss des Behälters. Da der Behälter häufig jedoch mit einem qualitätssichernden Verschluss verschlossen ist und dieser nicht beschädigt werden darf, ist vorgesehen, dass die Klammer zwar um den Verschluss herumgreift, diesen jedoch nicht berührt. Weiterhin ist es vor allem bei karbonisierten Flüssigkeiten erforderlich, dass der Verschluss nicht beschädigt wird, da dadurch Luft in den Behälter eindringen könnte, was die Flüssigkeit zum Überschäumen bringen kann. Auch in diesem Fall ist ein Umgreifen der Klammer 104 um den Verschluss ohne Berührung des Verschlusses vorteilhaft.

Dazu ist in Fig. 4b eine Draufsicht der Vorrichtung mit Hinblick auf diesen Vorgang schematisch dargestellt. Der Behälter 130 mit dem Schrumpfetikett 381 befindet sich in einer Position auf einem der Klammersterne. Die Klammer 104 des oberen Klammerkranzes umfasst in dieser Position den Verschluss des Behälters, wie in Fig. 4a dargestellt. Wie zu erkennen ist, ist die Klammer 104 so ausgebildet, dass sie in verschlossenem Zustand zumindest so weit um den Verschluss herumgreift, dass dieser nicht durch die übrigbleibende Öffnung der Klammerhälften 441 und 442 hindurchpasst, es jedoch weiterhin ein gewisses Spiel zwischen Verschluss und Klammerhälften gibt. Eine Berührung der Klammerhälften 441 und 442 mit dem Verschluss des Behälters 130 findet jedoch bevorzugt nicht statt, so dass kein unnötiger Druck auf den Verschluss und das eventuell vorgesehene Qualitätssiegel ausgeübt wird. Sollte der Behälter aufgrund wirkender Fliehkräfte beim Transport durch den Klammerstern eine Bewegung erfahren, können ihn die Klammerhälften 441 und 442 fixieren.

Fig. 5 zeigt eine schematische Darstellung einer Klammer eines oberen Klammerkranzes. Es ist vorgesehen, dass die Klammerhälften 541 und 542 in ihrer Ausgangsposition in geöffnetem Zustand durch eine Feder 540 vorgespannt werden. In dieser Position befindet sich die Klammer bzw. die Klammerhälften, nachdem ein Behälter losgelassen oder bevor ein Behälter gegriffen wird. Wenn ein Behälter gegriffen werden soll, kann ein Hebel 541 aus einer Ausgangsposition in die gestrichelte Position gedreht werden, wodurch er die Enden 543 und 544 der Klammerhälften auseinanderdrückt. Durch dieses Auseinanderdrücken werden die vorderen Hälften 541 und 542 der Klammer über die Drehpunkte 546 und 545, auf der die Klammerhälften gelagert sind, entgegen der Federkraft zusammengedrückt, so dass die Feder gestaucht wird. Hat der Hebel 541 seine gestrichelte Endposition erreicht, so befinden sich die Klammerhälften in der hier dargestellten gestrichelten Anordnung, in der sie beispielsweise um den Verschluss eines Behälters greifen können. Auf diese Weise wird verhindert, dass zu viel Druck auf den Verschluss ausgeübt wird. Es kann alternativ auch vorgesehen sein, dass die Klammerhälften 441 und 442 durch Wirkung einer Feder in die geschlossene Position, in der sie den Verschluss des Behälters umgreifen, geführt werden. In diesem Fall wird aber aufgrund der Federkraft gegebenenfalls ein Druck auf den Verschluss ausgeübt, was zur Beschädigung führen kann. Diese Ausführung kann sich jedoch als vorteilhaft erweisen, sofern der Behälter noch nicht verschlossen ist oder beispielsweise, wenn die Klammern um weniger empfindliche Bereiche des Behälters greifen, auf die Druck aufgeübt werden darf.

## Patentansprüche

1. Paar von Klammersternen (301, 302), **dadurch gekennzeichnet, daß** jeder Klammerstern einen unteren Klammerkranz und einen oberen Klammerkranz (102) mit jeweils einer Vielzahl von Klammern (304, 304', 305, 305') umfasst, wobei der untere und obere Klammerkranz (101, 102) geeignet sind, Behälter an einem oberen Bereich und einem unteren Bereich zu greifen, wobei der obere Klammerkranz (102) so gelagert ist, dass sein Abstand zum unteren Klammerkranz (101) verändert werden kann, wobei die Klammersterne (301, 302) so angeordnet sind, dass sie Behälter, die einem der Klammersterne beispielsweise über einen Förderer zugefördert werden können, von diesem Klammerstern zu dem anderen Klammerstern übergeben werden können und wobei die Klammersterne (301, 302) über eine gemeinsame Antriebsvorrichtung (370) für eine Veränderung des Abstands miteinander gekoppelt sind, sodass eine Veränderung des Abstands des jeweils oberen Klammerkranzes zum unteren Klammerkranz synchron an beiden Klammersternen ausgeführt werden kann.

2. Paar von Klammersternen nach Anspruch 1, **dadurch gekennzeichnet, dass** in zumindest einem der Klammersterne der untere Klammerkranz (101) und der obere Klammerkranz (102) über eine längenverstellbare Achse/Welle (103) miteinander verbunden sind.

3. Paar von Klammersternen nach Anspruch 1 oder 2, **dadurch gekennzeichnet, dass** in zumindest einem der Klammersterne Mittel zur Steuerung des unteren Klammerkranzes (101) auf der vom oberen Klammerkranz (102) abgewandten Seite des unteren Klammerkranzes (101) angeordnet sind und/oder Mittel zur Steuerung des oberen Klammerkranzes (102) auf der vom unteren Klammerkranz abgewandten Seite des oberen Klammerkranzes angeordnet sind.

4. Paar von Klammersternen nach einem der Ansprüche 1 bis 3, **dadurch gekennzeichnet, dass** in zumindest einem der Klammersterne jeder Klammer des oberen Klammerkranzes ein Federelement (540) zugeordnet ist, das die Klammer in eine geöffnete Position vorspannt und dieser Klammer ein Hebel (541) zugeordnet ist, der die Klammer in einer geschlossenen Position fixieren kann.

5. Paar von Klammersternen nach einem der Ansprüche 1 bis 4, **dadurch gekennzeichnet, dass** in zumindest einem der Klammersterne der Abstand (102) des oberen Klammerkranzes zum unteren Klammerkranz (101) so eingestellt werden kann, dass der obere Bereich sich wenigstens über einen Verschluss eines Behälters erstreckt und/oder sich der untere Bereich über 1/4 der Länge des Behälters, vorzugsweise über 1/5 der Länge des Behälters von der unteren Begrenzung des Behälters aus erstreckt.

6. Paar von Klammersternen nach einem der Ansprüche 1 oder 5, **dadurch gekennzeichnet, dass** Klammern des unteren/oberen Klammerkranzes (101, 102) des einen Klammersterns einen Behälter im unteren/oberen Bereich mit einem Versatz zu den Klammern des unteren/oberen Klammerkranzes des anderen Klammersterns greifen können.

7. Verfahren zum Befördern von Behältern mittels zweier Klammersterne (301, 302), wobei ein Behälter, der dem ersten Klammerstern zugeführt wird, von diesem an den zweiten Klammerstern übergeben wird, **dadurch gekennzeichnet, daß** jeder der Klammersterne einen unteren Klammerkranz (101) und einen oberen Klammerkranz (102) umfasst, wobei der untere Klammerkranz (101) einen Behälter in einem unteren Bereich greift und der obere Klammerkranz (102) den Behälter in einem oberen Bereich greift, wobei der Abstand des oberen Klammerkranzes (102) zum unteren Klammerkranz (101) verändert werden kann, und wobei die Klammersterne (301, 302) über eine gemeinsame Antriebsvorrichtung (370) für eine Veränderung des Abstands miteinander gekoppelt sind, sodass eine Veränderung des Abstands des jeweils oberen Klammerkranzes zum unteren Klammerkranz synchron an beiden Klammersternen ausgeführt wird.

8. Verfahren nach Anspruch 7, **dadurch gekennzeichnet, dass** jede Klammer (304, 304') des oberen Klammerkranzes (102) in einer geöffneten Position durch ein Federelement (540) vorgespannt wird und durch einen Hebel (541), der sich über einen Totpunkt hinwegbewegt, in eine geschlossene Position überführt und gesperrt wird.

9. Verfahren nach Anspruch 7 oder 8, **dadurch gekennzeichnet, dass** der Abstand des oberen Klammerkranzes (102) zum unteren Klammerkranz (101) so eingestellt wird, dass der obere Bereich einen Verschluss eines Behälters umfasst und der untere Bereich sich von der unteren Begrenzung des Behälter über 1/4 der Länge des Behälters, vorzugsweise über 1/5 der Länge des Behälters erstreckt.

10. Verfahren nach einem der Ansprüche 7 bis 9, **dadurch gekennzeichnet, dass** die Klammern des oberen Klammerkranzes (102) einen Behälter im oberen Bereich umgreifen, wobei das Umgreifen so erfolgt, dass zwischen den Klammern und dem oberen Bereich des Behälters Spiel ist.

11. Verfahren nach einem der Ansprüche 7 bis 10, **dadurch gekennzeichnet, dass** die Klammern des oberen Klammerkranzes (102) einen Behälter im oberen Bereich oberhalb eines an dem Behälter befestigten Schrumpfetiketts greifen.

12. Verfahren nach einem der Ansprüche 7 bis 11, **dadurch gekennzeichnet, dass** Klammern (304, 304'; 305, 305') des unteren/oberen Klammerkranzes (101, 102) des einen Klammersterns einen Behälter im unteren/oberen Bereich mit einem Versatz zu den Klammern des unteren/oberen Klammerkranzes des anderen Klammersterns greifen.

## Claims

1. A pair of clamping starwheels (301, 302), **characterized in that** each clamping starwheel comprises a lower clamp rim and an upper claim rim (102), each with a plurality of clamps (304, 304'; 305, 305'), wherein the lower and the upper clamp rim (101, 102) are adapted to grip containers on an upper portion and a lower portion, wherein the upper clamp rim (102) is positioned such that its distance from the lower clamp rim (101) can be changed, wherein the clamping starwheels (301, 302) are arranged such that they can transfer containers, which can be conveyed to one of the clamping starwheels for instance via a conveyor, from said clamping starwheel to the other clamping starwheel, and wherein the clamping starwheels (301, 302) are coupled with each other via a joint drive device (370) for changing the distance, so that a change in the distance of the respectively upper clamp rim from the lower clamp rim can be carried out synchronously on both clamping starwheels.

2. A pair of clamping starwheels according to claim 1, **characterized in that** in at least one of the clamping starwheels, the lower clamp rim (101) and the upper clamp rim (102) are connected to each other via a length-adjustable axle/shaft (103).

3. A pair of clamping starwheels according to claim 1 or 2, **characterized in that** in at least one of the clamping starwheels, means for controlling the lower clamp rim (101) are arranged at the side of the lower clamp rim (101) facing away from the upper clamp rim (102), and/or means for controlling the upper clamp rim (102) are arranged at the side of the upper clamp rim facing away from the lower clamp rim.

4. A pair of clamping starwheels according to any one of claims 1 to 3, **characterized in that** in at least one of the clamping starwheels, each clamp of the upper clamp rim has assigned thereto a spring element (540) which biases the clamp into an opened position and said clamp has assigned thereto a lever (541) which can fix the clamp in a closed position.

5. A pair of clamping starwheels according to any one of claims 1 to 4, **characterized in that** in at least one of the clamping starwheels, the distance (102) of the upper clamp rim from the lower clamp rim (101) can be adjusted such that the upper portion extends at least over a cap of a container and/or the lower portion extends over 1/4 of the length of the container, preferably over 1/5 of the length of the container, from the lower boundary of the container.

6. A pair of clamping starwheels according to any one of claims 1 or 5, **characterized in that** clamps of the lower/upper clamp rim (101, 102) of the one clamping starwheel can grip a container in the lower/upper portion with an offset to the clamps of the lower/upper clamp rim of the other clamping starwheel.

7. A method for conveying containers by means of two clamping starwheels (301, 302), wherein a container which is supplied to the first clamping starwheel is transferred from said clamping starwheel to the second clamping starwheel, **characterized in that** each of the clamping starwheels comprises a lower clamp rim (101) and an upper clamp rim (102), wherein the lower clamp rim (101) grips a container in a lower portion and the upper clamp rim (102) grips the container in an upper portion, wherein the distance of the upper clamp rim (102) from the lower clamp rim (101) can be changed, and wherein the clamping starwheels (301, 302) are coupled with each other via a joint drive device (370) for changing the distance, so that a change in the distance of the respectively upper clamp rim from the lower clamp rim is carried out synchronously on both clamping starwheels.

8. The method according to claim 7, **characterized in that** each clamp (304, 304') of the upper clamp rim (102) is biased in an opened position by a spring element (540) and is transferred into a closed position and blocked by a lever (541) which moves beyond a dead center.

9. The method according to claim 7 or 8, **characterized in that** the distance of the upper clamp rim (102) from the lower clamp rim (101) is adjusted such that the upper portion comprises a cap of a container and the lower portion extends from the lower boundary of the container over 1/4 of the length of the container, preferably over 1/5 of the length of the container.

10. The method according to any one of claims 7 to 9, **characterized in that** the clamps of the upper clamp rim (102) grip around a container in the upper portion, the gripping operation being carried out such that there is a clearance between the clamps and the upper portion of the container.

11. The method according to any one of claims 7 to 10, **characterized in that** the clamps of the upper clamp rim (102) grip a container in the upper portion above a shrink label attached to the container.

12. The method according to any one of claims 7 to 11, **characterized in that** clamps (304, 304'; 305, 305') of the lower/upper clamp rim (101, 102) of the one clamping starwheel grip a container in the lower/upper portion with an offset to the clamps of the lower/upper clamp rim of the other clamping starwheel.

## Revendications

1. Paire d'étoiles de transfert rotatives à pinces (301, 302), **caractérisée en ce que** chaque étoile de transfert rotative à pinces comprend une couronne de pinces inférieure et une couronne de pinces supérieure (102) avec chacune une pluralité de pinces (304, 304', 305, 305'), **en ce que** la couronne de pinces inférieure et celle supérieure (101, 102) sont adaptées à la préhension de récipients ou contenants au niveau d'une zone supérieure et d'une zone inférieure, **en ce que** la couronne de pinces supérieure (102) est montée de manière à pouvoir faire varier sa distance à la couronne de pinces inférieure (10), **en ce que** les étoiles de transfert rotatives à pinces (301, 302) sont agencées de manière telle, que les contenants, qui peuvent être amenés à l'une des étoiles de transfert rotatives à pinces, par exemple par l'intermédiaire d'un transporteur, peuvent être transférés par cette étoile de transfert rotative à pinces à l'autre étoile de transfert rotative à pinces, et **en ce que** les étoiles de transfert rotatives à pinces (301, 302) sont couplées l'une à l'autre par l'intermédiaire d'un dispositif d'entraînement (370) commun pour assurer une variation de la distance d'espacement, de sorte qu'une variation de la distance de la couronne de pinces supérieure respective à la couronne de pinces inférieure respective, peut être effectuée de manière synchrone sur les deux étoiles de transfert rotatives à pinces.

2. Paire d'étoiles de transfert rotatives à pinces selon la revendication 1, **caractérisée en ce que** dans l'une au moins des étoiles de transfert rotatives à pinces, la couronne de pinces inférieure (101) et la couronne de pinces supérieure (102) sont reliées mutuellement par l'intermédiaire d'un axe/arbre (103) réglable en longueur.

3. Paire d'étoiles de transfert rotatives à pinces selon la revendication 1 ou la revendication 2, **caractérisée en ce que** dans l'une au moins des étoiles de transfert rotatives à pinces, des moyens pour commander la couronne de pinces inférieure (101) sont agencés sur le côté de la couronne de pinces inférieure (101), qui est opposé à celui dirigé vers la couronne de pinces supérieure (102), et/ou des moyens pour commander la couronne de pinces supérieure (102) sont agencés sur le côté de la couronne de pinces supérieure, qui est opposé à celui dirigé vers la couronne de pinces inférieure.

4. Paire d'étoiles de transfert rotatives à pinces selon l'une des revendications 1 à 3, **caractérisée en ce que** dans l'une au moins des étoiles de transfert rotatives à pinces, à chaque pince de la couronne de pinces supérieure est associé un élément de ressort (540), qui assure une précontrainte de la pince dans une position ouverte, et à cette pince est associé un levier (541), qui peut fixer la pince dans une position fermée.

5. Paire d'étoiles de transfert rotatives à pinces selon l'une des revendications 1 à 4, **caractérisée en ce que** dans l'une au moins des étoiles de transfert rotatives à pinces, la distance de la couronne de pinces supérieure (102) à la couronne de pinces inférieure (101) peut être réglée de manière telle, que la zone supérieure s'étende au moins sur la hauteur d'une fermeture d'un contenant et/ou que la zone inférieure s'étende sur 1/4 de la longueur du contenant, de préférence sur un 1/5 de la longueur du contenant, à partir de la limite inférieure du contenant.

6. Paire d'étoiles de transfert rotatives à pinces selon l'une des revendications 1 ou 5, **caractérisée en ce que** des pinces de la couronne de pinces inférieure/supérieure (101, 102) de l'une des étoiles de transfert rotatives à pinces, peuvent assurer la préhension d'un contenant dans la zone inférieure/supérieure, avec un décalage par rapport aux pinces de la couronne de pinces inférieure/supérieure de l'autre étoile de transfert rotative à pinces.

7. Procédé pour transporter des récipients ou contenants au moyen de deux étoiles de transfert rotatives à pinces (301, 302), un contenant qui est amené à la première étoile de transfert rotative à pinces, pouvant être transféré par celle-ci à la deuxième étoile de transfert rotative à pinces, **caractérisé en ce que** chacune des étoiles de transfert rotatives à pinces comprend une couronne de pinces inférieure (101) et une couronne de pinces supérieure (102), **en ce que** la couronne de pinces inférieure (101) assure une préhension d'un contenant dans une zone inférieure et la couronne de pinces supérieure (102) assure une préhension du contenant dans une zone supérieure, **en ce qu'**il est possible de faire varier la distance de la couronne de pinces supérieure (102) à la couronne de pinces inférieure (101), et **en ce que** les étoiles de transfert rotatives à pinces (301, 302) sont couplées l'une à l'autre par l'intermédiaire d'un dispositif d'entraînement (370) commun pour assurer une variation de la distance d'espacement, de sorte qu'une variation de la distance de la couronne de pinces supérieure respective à la couronne de pinces inférieure respective, est effectuée de manière synchrone sur les deux étoiles de transfert rotatives à pinces.

8. Procédé selon la revendication 7, **caractérisé en ce que** chaque pince (304, 304') de la couronne de pinces supérieure (102) est précontrainte dans une position ouverte par un élément de ressort (540), et est transférée et bloquée dans une position fermée par un levier (541), qui se déplace de manière à passer un point mort.

9. Procédé selon la revendication 7 ou la revendication 8, **caractérisé en ce que** la distance de la couronne de pinces supérieure (102) à la couronne de pinces inférieure (101) est réglée de manière telle que la zone supérieure englobe la fermeture d'un contenant, et que la zone inférieure s'étende, à partir de la limite inférieure du contenant, sur 1/4 de la longueur du contenant, de préférence sur un 1/5 de la longueur du contenant.

10. Procédé selon l'une des revendications 7 à 9, **caractérisé en ce que** les pinces de la couronne de pinces supérieure (102) entourent un contenant dans la zone supérieure, ceci se faisant de manière à conserver un jeu entre les pinces et la zone supérieure du contenant.

11. Procédé selon l'une des revendications 7 à 10, **caractérisé en ce que** les pinces de la couronne de pinces supérieure (102) assurent la préhension d'un contenant dans la zone supérieure, au-dessus d'une étiquette rétrécissable ou rétractable fixée sur le contenant.

12. Procédé selon l'une des revendications 7 à 11, **caractérisé en ce que** des pinces (304, 304', 305, 305') de la couronne de pinces inférieure/supérieure (101, 102) de l'une des étoiles de transfert rotatives à pinces, assurent la préhension d'un contenant dans la zone inférieure/supérieure, avec un décalage par rapport aux pinces de la couronne de pinces inférieure/supérieure de l'autre étoile de transfert rotative à pinces.
